# EUROPÄISCHE PATENTSCHRIFT

(11) **EP 3 182 570 B1**
(45) Veröffentlichungstag und Bekanntmachung des Hinweises auf die Patenterteilung: **03.04.2019**
(21) Anmeldenummer: 16200903.9
(22) Anmeldetag: 28.11.2016
(51) Int. Cl.: H02K 15/12, B05D 1/06, B05B 5/00, H02K 15/02, H02K 1/16, H02K 3/34, B05B 5/08, B05D 3/12, B05D 3/02

(54) **VERFAHREN ZUM BESCHICHTEN EINES ELEKTROMAGNETISCH ERREGBAREN KERNS**
METHOD FOR COATING AN ELECTROMAGNETICALLY EXCITABLE CORE
PROCÉDÉ DE REVÊTEMENT D'UN NOYAU ÉLECTROMAGNÉTIQUE

(30) Priorität: 17.12.2015 DE 102015225758
(43) Veröffentlichungstag der Anmeldung: 21.06.2017
(73) Patentinhaber: SEG Automotive Germany GmbH, 70499 Stuttgart (DE)
(72) Erfinder: Ossenkopp, Stefan, 31177 Harsum (DE); Lange, Fabian, 30175 Hannover (DE); Schneider, Falk, 28213 Bremen (DE)
(74) Vertreter: Steinbauer, Florian

(56) Entgegenhaltungen:
- EP-A2- 1 241 774
- WO-A1-94/29941
- DE-A1- 10 113 258
- KR-A- 20150 094 014
- US-A- 3 034 479
- US-A- 5 592 731
- US-A1- 2003 020 357

## Beschreibung

### Stand der Technik

Zum gegenseitigen Isolieren von Wicklung und Eisenkern einer elektrischen Maschine sind verschiedene Techniken bekannt. So werden beispielsweise zwischen den Wicklungsdrähten und den Nuten bzw. Nutwänden so genannte Isolierpapiere eingebracht, die zwischen dem Eisenteil des Stators oder Rotors und damit einer Nutwand und einem Draht einer Wicklung einen Isolierabstand darstellen. Der Draht selbst ist typischer Weise durch eine Kunststoff- bzw. Lackisolation gegen Kurzschlüsse mit sich selbst oder benachbarten Drähten isoliert. Die Isolation zwischen einer Nutwand und den isolierten Drähten ist dazu da, sowohl während der Fertigung der elektrischen Maschine bzw. des Ständers bzw. Rotors und auch während des Betriebs der elektrischen Maschine mit dem Ständer oder dem Rotor zu verhindern, dass beispielsweise beim Einlegen des Drahtes, dessen Isolation an Kanten der Nut aufgescheuert wird und dadurch einen Kurzschluss zwischen dem Eisen und dem Draht zu vermeiden. Des Weiteren dient die Isolierung zwischen dem Eisen und dem isolierten Draht auch dazu, bei im Betrieb der elektrischen Maschine wirkenden Beschleunigungen bzw. Vibrationen der Maschine ein Aufscheuern der Isolation des Drahtes an Eisenteilen der Nut oder an benachbarten Drahtabschnitten zu verhindern. Typischer Weise sind die Eisenteile aus einem oder mehreren Lamellenpaketen aufgebaut. Ein solches Lamellenpaket wird aus üblicher Weise deckungsgleichen einzelnen Lamellen zusammengesetzt. Die einzelnen Lamellen weisen die entsprechenden Konturen der später nach dem Paketieren zur Verfügung zu stellenden Nuten auf. Derartige Nuten werden üblicher Weise durch Ausstanzen hergestellt. Bei diesem Ausstanzen entsteht ein Stanzgrat, so dass die Oberfläche einer jeden Nut verhältnismäßig rau ist. Würde dann der lediglich lackisolierte Draht direkt an dieser Nutoberfläche liegen, so würde im Falle einer intakten Lackisolation des Drahtes die Maschine zwar zunächst ohne Weiteres bestimmungsgemäß funktionieren; aufgrund der typischer Weise jedoch auftretenden Vibrationen würde sich die Lackisolation des Drahtes an dieser rauen Oberfläche verhältnismäßig leicht durchscheuern. Ein Kurzschluss der Wicklung mit dem Eisenteil wäre eine unmittelbare Folge. Die Maschine wäre nicht mehr funktionsfähig.

Zum Isolieren des Eisens sind grundsätzlich verschiedene Verfahren bekannt. Hierzu gehört einerseits das Isolieren mit dem bereits erwähnten Nutpapier oder das Isolieren durch Beschichten des Eisenkerns mittels eines Pulvers, welches nach dem Beschichten durch spezielle Verfahrensschritte in sich verfestigt und am Stator bzw. Eisenteil dauerhaft befestigt wird. Bekannt ist beispielsweise, das elektrostatische Pulverbeschichten mit Sprühauftrag oder auch das elektrostatische Wirbelbadverfahren. Des Weiteren ist das so genannte Wirbelsintern bekannt. Nachteilig ist beim zuletzt genannten Verfahren, dass eine verhältnismäßig hohe Schichtstärke unvermeidbar ist und daher ein elektrischer Füllfaktor und somit die Leistungsdichte verhältnismäßig gering ausfällt. Beim elektrostatischen Pulverbeschichten werden die typischer Weise rotationssymmetrischen Bauteile zuerst in einem Erwärmungsprozess von Ölen und anderen Restsubstanzen gereinigt. Des Weiteren werden diese Teile maskiert. Maskieren bedeutet, dass auf das zu beschichtende Teil Abdeckungen (Masken) aufgebracht werden, damit an dieser maskierten Stelle kein Pulver aufgetragen wird. Danach erfolgt der Auftrag des Pulvers. Durch sein unterschiedliches Potential zum geerdeten Bauteil setzt sich das Pulver an diesem ab. Danach wird das Pulver an den Stellen, an denen ein Auftrag erfolgt aber unerwünscht ist, abgestreift. Abschließend erfolgt die Aushärtung des Pulvers. Typischer Weise werden rotationssymmetrische Bauteile einzeln beschichtet. Ein derartiges Verfahren ist beispielswiese aus der deutschen Offenlegungsschrift DE 10 2008 054 810 A1 bekannt. Dabei werden mehrere Schichten bis zur so genannten Sättigung aufgetragen, um eine homogene Schicht herzustellen. Nachteilig ist bei derartigen rotationssymmetrischen Bauteilen, dass die Zugänglichkeit der Nuten bei Bauteilen mit nach innen geöffneten Nuten erschwert ist.

Des Weiteren ist die so genannte Flachpakettechnologie bekannt. Beispielhafte Veröffentlichungen sind die WO2001/054254 A1, die DE 10 2004 006 701 A1 sowie die DE 10 2007 036 313 A1. Bei dieser Technologie wird die Wicklung im flachen Zustand in den Eisenkern eingelegt und anschließend durch verschiedene Biege- und Schweißprozesse in ihre ringförmige Endgeometrie gebracht. Besonders der Biegeprozess mit seiner plastischen Umformung bringt erhebliche mechanische Spannungen in das Lamellenpaket ein. Es sind im Wesentlichen Zugbeanspruchungen am Außendurchmesser des Jochs und Druckbeanspruchungen im Nutgrund und damit dem Innendurchmesser des Jochs. Wie beispielsweise in der zuerst genannten Schrift offenbart, werden zur Isolation einzeln gefügte Isolationspapiere verwendet, die sich im Biegeprozess der sich verändernden Nutform anpassen können.

Durch den Einsatz von Nutisolationspapier können grundsätzlich verschiedene Probleme auftauchen:
Das Isolationspapier kann in den Nuten axial und radial rutschen.

Beim Einfügen der Wicklung in den Eisenkern kann es zum Umknicken des Isolationspapiers kommen, so dass Teile der Nutwand nicht isoliert und andere Teile der Nutwand doppelt isoliert sind.

Das Isolationspapier kann während des Fertigungsprozesses, beispielsweise perforiert werden oder einreißen.

Weiterer Stand der Technik ist aus den Dokumente DE 103 33 187 A1, DE 196 44 360, US 2002/127332 A1, US 2003/0141770 A1, US 6,322,629 B1, DE 60 113 501 T2, JP 2009017632 A sowie US 2002/0130563 A1 bekannt.

Aus der EP 1 241 774 A2 ist ein Verfahren zum Beschichten eines elektromagnetisch erregbaren Kerns durch ein elektrostatisches Feld bekannt. Hierbei wird eine Vorrichtung zur Beschichtung mit einem elektrisch isolierenden Pulver in das Feld eingebracht, wobei der Kern als Elektrode in dem Feld wirkt, wodurch eine Schicht des Pulvers auf dem Kern ausgebildet wird. Nach dem Beschichten wird die Schicht erwärmt und durch Anschmelzen mit dem Kern verbunden. Der Kern ist prismatisch ausgebildet, wobei die Oberfläche der prismatischen Form von Nuten durchbrochen ist. Die Pulverpartikel befinden sich in einem Pulverbehälter, der an eine Gleichspannung angeschlossen ist, wodurch sich das elektrische Feld zum geerdeten Kern einstellt.

Die US 2003/0020357 A1 offenbart ein Verfahren zum Beschichten eines Stators mit einem elektrisch isolierenden Pulver durch ein elektrostatisches Feld. Der Stator weist eine langgestreckte, prismatische Form auf.

Die KR 20150094014 A offenbart ein Verfahren zum Beschichten eines Stators mit einem elektrisch isolierenden Pulver. Auch bei dieser Druckschrift weist der Stator eine langgestreckte, prismatische Form auf.

Aus der US 5,592,731 A ist ein Verfahren zum Beschichten eines Stators bekannt, welcher als langgestreckter Körper mit mehreren, miteinander verbundenen Kernen ausgebildet ist und mit einem elektrisch isolierenden Pulver beschichtet wird.

Die US 3,034,479 offenbart ein Verfahren zum Beschichten eines elektromagnetischen Kerns, bei welchem eine Elektrode in die Nuten des Kerns eingeführt wird. Die Elektrode einerseits und der Kern andererseits werden als gegensätzliche Polungen eines elektrostatischen Felds genutzt.

### Offenbarung der Erfindung

Gemäß einem ersten Aspekt der Erfindung wird ein Verfahren zum Beschichten eines elektromagnetisch erregbaren Kerns durch ein elektrostatisches Feld mit den Merkmalen des Anspruchs 1 vorgeschlagen.

Gemäß einem weiteren Aspekt ist vorgesehen, dass mehrere Kerne unmittelbar aufeinander folgend mit dem Pulver beschichtet werden. Des Weiteren ist nach einem anderen Aspekt der Erfindung vorgesehen, dass die Stirnenden des Kerns lamelliert ausgeführt werden und zwei solche lamellierten Stirnenden zweier Kerne direkt nacheinander durch die Beschichtungsvorrichtung transportiert werden. Dies hat den Vorteil, dass sich das Pulver gleichmäßig über die komplette Länge eines Kerns verteilt. Es wird dadurch vermieden, dass sich in den äußeren Randbereichen einzelner Kerne unregelmäßige Schichtdicken ergeben. Würden einzelne prismaförmige Kerne beschichtet werden, so müsste beispielsweise mit unregelmäßigen Schichtaufträgen gerechnet werden. So wurde im Rahmen von Versuchen gefunden, dass an den Stirnenden eines Kerns unregelmäßige Schichtaufträge auftauchen und dabei stellenweise die Isolationsschicht fehlt und stellenweise die Isolationsschicht überdurchschnittlich dick ist.

Besonders vorteilhaft ist das Verfahren, wenn die lamellierten Stirnenden zweier Kerne beim Transport durch die Beschichtungsvorrichtung aneinander stoßen. Dadurch wird besonders sichergestellt, dass an den Stirnenden gar keine oder nur eine sehr dünne vorzugsweise nur teilweise aufgetragene Isolationsschicht aufgebracht wird, die beispielsweise mit geringem Aufwand entfernt werden kann. Es ist deshalb von Vorteil, an den Stirnenden keine Isolationsschicht zu haben, weil dadurch ein elektromagnetischer Widerstand zwischen den beiden Stirnenden nach dem Miteinanderfügen (Rundbiegen eines prismaförmigen Kerns) besonders gering ist. Zudem ist es möglich, durch das direkt Hintereinanderreihen der Bauteile einen kontinuierlichen Fertigungsprozess zu schaffen, der zudem einen gleichmäßigen Schichtauftrag im Randbereich der Bauteile ermöglicht. Dadurch verhalten sich die Endbereiche eines jeden Kerns (Stirnende) gleich bzw. sehr ähnlich wie die Mittelbereiche der einzelnen Bauteile zwischen den Stirnenden, so dass ein homogener Schichtauftrag über das komplette Bauteil realisiert werden kann.

Durch die Hintereinanderreihung der Bauteile werden neben dem besseren Schichtauftrag weitere Vorteile erzielt. So ist das Abdecken nicht zu beschichtender Bereiche an der Stoßstelle (Stirnende) nicht erforderlich. Die Berührung der beiden Bauteilenden bzw. Stirnenden verhindert die Beschichtung weitestgehend bzw. ggf. vollständig. Dadurch wird ein zusätzlicher Fertigungsschritt, wie beispielsweise das Entschichten der Stirnenden eingespart.

Damit der Kern nach dem Beschichten und dem anschließenden Rundbiegen einen klar definierten Außendurchmesser aufweist, ist vorgesehen, dass der Kern nach dem Beschichten stellenweise entschichtet wird. Dies bedeutet beispielsweise, dass der Außendurchmesser bzw. der Teil des Jochs, der den Öffnungen der Nuten abgewandt ist, von Pulver befreit wird.

Des Weiteren ist es von Vorteil, wenn an den Stirnenden des Kerns in Stapelrichtung der Lamellen zumindest teilweise am Joch die Schicht entfernt wird. Dies ist deshalb von Vorteil, weil dadurch ermöglicht wird, einen Kern in einem Gehäuse ohne die zusätzliche Isolationsschicht zu klemmen. Dadurch ist sichergestellt, dass die zu klemmende Länge des Kerns in Stapelrichtung der Lamellen verhältnismäßig homogen aus Elektroblech oder Weicheisen besteht und nicht durch zusätzliche nachgiebige Isolationsschichten entlastet wird. Es kommt sonst zu einem Nachlassen der Klemmung und demzufolge ggf. zu einem Klemmverband mit stark verringerter Vorspannung.

Um einen möglichst kleinen Luftspalt zwischen dem Kern und eines elektromagnetisch wechselwirkenden Teil zu erreichen, ist vorgesehen, dass die Teile des Zahns, welche später nach radial innen oder außen gerichtet sind, von einer gegebenenfalls aufgetragenen Schicht befreit werden. Auch an einer Fläche des Jochs, welche dem Teil des Zahns abgewandt ist, welcher elektromagnetisch wechselwirken soll, kann entschichtet werden. Das Entschichten kann grundsätzlich mittels Bürsten oder Abstreifer erfolgen.

Erfindungsgemäß ist vorgesehen, eine bewegliche Elektrode zu verwenden, die in zumindest eine Nut in Nutlängsrichtung, d. h. parallel zum Verlauf des Nutschlitzes in Stapelrichtung der Lamellen eingebracht wird. Es ist dabei vorgesehen, dass während des Aufenthalts des Kerns mit der beweglichen Elektrode im elektrostatischen Feld die bewegliche Elektrode das gleiche Potential wie der Kern hat oder ohne Potential ist. Dies hat den Vorteil, dass durch diese bewegliche Elektrode, insbesondere ein Feld an Nutüberständen, wie beispielsweise dem Zahnkopf, beeinflusst werden kann, um dadurch unvorteilhafte Schichtdicken von Pulvermaterial zu vermeiden. Durch die bewegliche Elektrode wird im elektrostatischen Feld die Dichte der Feldlinien vor allem an den Ecken eines Zahnkopfes verringert, so dass es in der Folge nicht mehr zu ungewollten Materialanhäufungen im Bereich des Zahnkopfes kommt. Des Weiteren ist vorgesehen, dass die bewegliche Elektrode im Laufe des Verfahrens zuerst ohne Potential in zumindest einer Nut eingeführt ist und vorzugsweise nach einem bestimmten Materialauftrag in der Nut zumindest ein gleichgerichtetes Potential wie der Kern aufweist.

Gemäß einem weiteren Aspekt der Erfindung kann vorgesehen sein, durch eine installierte Luftdüse überschüssiges Pulver in einer Nut oder an anderer Stelle abzutragen.

### Zeichnung

Figur 1 zeigt ein Verfahren zum Beschichten eines elektromagnetisch erregbaren Kerns durch ein elektrisches Feld in einer Beschichtungsvorrichtung,
Figur 2 zeigt ausschnittsweise einen Kern in der Vorrichtung zum Beschichten und dort speziell in der Station für einen Pulverauftrag mit einer Hilfsvorrichtung als bewegliche Elektrode, in
Figur 3 ist eine räumliche Ansicht der beweglichen Elektrode und eines Kerns 16 in nachbarschaftlicher Anordnung dargestellt.

### Beschreibung des Ausführungsbeispiels

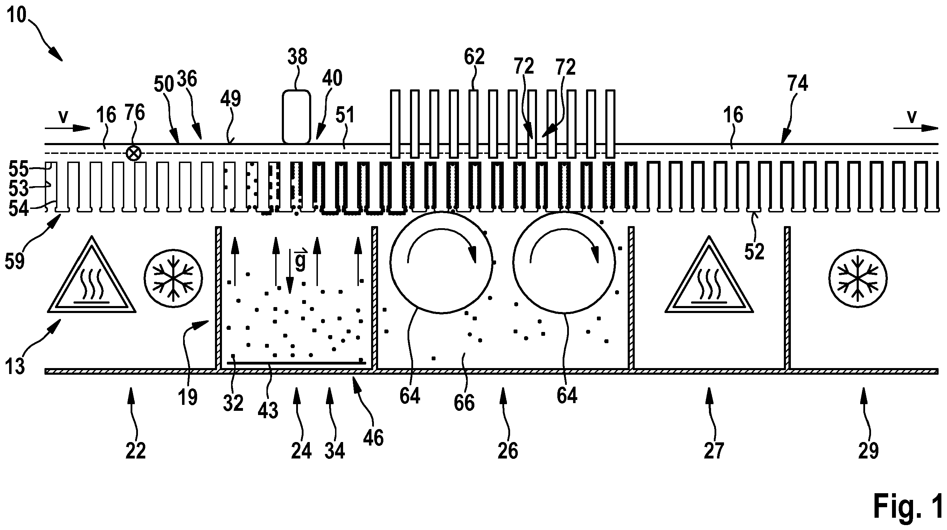

In Figur 1 ist ausschnittweise eine Vorrichtung 10 zur Durchführung eines Verfahrens zum Beschichten eines elektromagnetisch erregbaren Kerns 16 durch ein elektrisches, vorzugsweise elektrostatisches, Feld 19 dargestellt. Die Vorrichtung 10 ist so ausgeführt, dass in mehreren Stationen 22, 24, 26, 27 und 29 verschiedene Verfahrensschritte vorgenommen werden können. Die Station 22 dient beispielsweise dazu, einen Kern 16 vorzubehandeln. Bei dieser Vorbehandlung wird beispielsweise der Kern 16 aufgeheizt, um den Kern 16 von Ölen oder anderen Restsubstanzen bzw. Schichten zu reinigen. Im Anschluss daran erfolgt die Abkühlung des Bauteils Kern 16 auf beispielsweise Raumtemperatur. Bei der Station 24 werden Partikel 32 eines Pulvers 34 mit Hilfe eines elektrischen, vorzugsweise elektrostatischen, Feldes 19 auf Teile einer Oberfläche 36 des Kerns 16 aufgetragen. Hierzu wird der Kern 16 mittels eines einen Erdungskontakt gebenden Elements 38 zur Elektrode 40. Eine Gegenelektrode 43 befindet sich gemäß diesem Ausführungsbeispiel in einem Pulverbehälter 46. In diesem Pulverbehälter 46 ist anfänglich auch das Pulver 34 angeordnet. Wird im Rahmen des Verfahrens das elektrische Feld 19 eingeschaltet und dementsprechend die entsprechenden Elektrode 40 bzw. Gegenelektrode 43 aktiviert, so wird das Pulver 34 bzw. dessen Partikel 32 auf den Kern 16 aufgetragen. Für den Fall, dass der Kern 16 keine Maskierungen aufweist, werden die Partikel 32 beispielsweise auf einem Jochrücken 49, auf den Stirnseiten 51 des Kerns 16, allen Flächen 53, 54 und 55 einer Nut 57 und einer Zahnendfläche 59 aufgetragen. Die Partikel 32 des Pulvers 34 schweben dabei in einer, bzw. elektrostatischen, Pulverwolke aus dem Pulverbehälter 46 zu den eben genannten Oberflächen des Kerns 16. In der Station 26 werden dann von den Oberflächen die Partikel entfernt auf denen diese nicht sein sollen. Im Beispiel werden hierzu mittels Abstreifern 62 an den Stirnseiten 51 des Kerns 16 Partikel entfernt. Des Weiteren wird in dieser Station 26 mittels rotierender Elemente 64, die beispielsweise als Walze oder Bürste ausgeführt sein können, Pulver 34 von den Zahnendflächen 59 entfernt. Das dabei entfernte Pulver 34 wird in einem Auffangbehälter 66 gesammelt und kann oder wird dem Pulverbehälter 46 wieder zugeführt. Mit der nächsten Station 27 ist vorgesehen, dass das restliche auf dem Kern 16 verbleibende Pulver 34 durch Heizen verflüssigt und dadurch das Pulver 34 in eine geschlossene Schicht umgewandelt (vernetzt). Dadurch entsteht eine homogene, anhaftende Isolationsschicht. Das Aushärten kann dabei beispielsweise induktiv oder durch Erhitzen in einem Ofen von außen erfolgen.

In der Station 29 würde der Kern 16 abkühlen bzw. gekühlt werden und vorzugsweise bei Raumtemperatur TR entnommen werden.

Wie somit anhand der Beschreibung und der Figur 1 erkennbar ist, ist ein Verfahren 13 zum Beschichten eines elektromagnetisch erregbaren Kerns 16 durch ein elektrisches, vorzugsweise elektrostatisches, Feld in einer Vorrichtung 10 zum Beschichten mit einem elektrisch isolierenden Pulver 34 offenbart. Das Pulver 34 wird in das Feld 19 eingebracht, wobei der Kern 16 als Elektrode 40 in dem Feld 19 wirkt. Dadurch wird eine Schicht ausgebildet. Nach dem Beschichten wird die Schicht durch einen Verfahrensschritt mit dem Kern 16 fest verbunden. Der Kern 16 weist eine prismaartige Form auf. Diese prismaartige Form wird vorzugsweise durch sechs Flächen gebildet, welche rechtwinklig aufeinander stehen. Auf einer Seite sind Nuten 57 angeordnet, die mit einem Nutschlitz eine Oberfläche der prismaartigen Form unterbrechen. Der Kern 16 weist dabei eine Polung des Feldes 19 auf und ist hierbei vorzugsweise geerdet. Partikel 32 des Pulvers 34 befinden sich in einem Pulverbehälter 46, wobei der Pulverbehälter 46 eine Polung aufweist, die der Polung des Kerns 16 entgegen gesetzt ist.

Beim Betrachten der Figur 1 wird deutlich, dass das Verfahren 13 in der Vorrichtung 10 lückenlos abläuft. Dies bedeutet, dass hier mehrere Kerne 16 unmittelbar aufeinander folgend mit dem Pulver 34 beschichtet werden. Gemäß Figur 1 wird zunächst ein erster Kern 16 von links in die Vorrichtung 10 eingeführt. Dabei finden mit dem Fortschreiten des ersten Kerns 16 in der Vorrichtung 10 die oben erwähnten Schritte in den Stationen 22 bis 29 statt. Die Bewegungsrichtung ist in der Figur 1 sowohl in der Station 22 als auch in der Station 29 jeweils mit einem Richtungspfeil und der Abkürzung v für Geschwindigkeit des Kerns 16 in der Vorrichtung 10 gekennzeichnet. Bezüglich des in Figur 1 rechts dargestellten Kerns 16, der vor dem in Figur 1 links dargestellten Kern 16 in die Vorrichtung 10 eingeführt wurde, macht deutlich, dass an ein in Bewegungsrichtung hinteres Stirnende 72 des ersten Kerns 16 der zweite Kern 16 mit einem in Bewegungsrichtung vorderen Stirnende 72 aneinander stößt. Bevorzugt ist vorgesehen, dass ein jeder Kern 16 lamelliert ausgeführt wird. Dies bedeutet, dass ein jeder Kern 16 aus vorzugsweise gleichen Lamellen aufgebaut ist. Hierzu werden gleiche Lamellen, vorzugsweise deckungsgleich, übereinander gestapelt. Die Lamellen 74 werden damit orthogonal zur Bewegungsrichtung und auch orthogonal zum Feld gemäß Station 24 gestapelt. Die Stapelrichtung 76 ist damit die gleiche Richtung, wie die Profilrichtung einer jeden Nut 57. Die Stirnenden 72 des Kerns 16 sind somit lamelliert ausgeführt, d. h. Schnittstellen mehrerer ausgestanzter Lamellen 74 bilden ein Stirnende, wobei zwei solche lamellierten Stirnenden 72 zweier Kerne 16 direkt nacheinander durch die Vorrichtung 10 zur Beschichtung transportiert werden. Beim Transport der Kerne 16, d. h. zumindest zweier Kerne 16, durch die Vorrichtung 10 zur Beschichtung, stoßen die lamellierten Stirnenden 72 zweier Kerne 16 aneinander.

Wie in Figur 1 dargestellt, ist vorgesehen, dass die Nutschlitze zwischen einem Joch 50 des Kerns 16 und dem Pulverbehälter 46 angeordnet sind. Bevorzugt weisen die Nuten 57 eine Ausrichtung in Richtung der Erdbeschleunigung g auf.

Wie in Station 26 dargestellt ist, ist vorgesehen, dass der Kern 16 nach dem Beschichten stellenweise entschichtet wird.

In Bezug auf das Entschichten eines bereits beschichteten Kerns 16 ist vorgesehen, dass an potentiell drei verschiedenen Flächenarten ein Entschichten vorgesehen ist: zunächst ist zwecks Ausbildung eines potentiell ein geringes Maß aufweisenden elektromagnetischen Spalts vorgesehen, dass eine für eine elektromagnetische Wechselwirkung vorgesehene Fläche eines Zahns 52, d. h. die Zahnendfläche 59 eines Zahns 52 von dem aufgetragenen Pulver befreit wird, welche nach dem Rundbiegen direkt einem Rotor oder Stator gegenüber angeordnet ist. Des Weiteren kann zusätzlich oder alternativ, wie bereits erwähnt, eine Stirnseite 51 einer Lamelle 74 zumindest teilweise entschichtet werden. Des Weiteren kann alternativ oder zusätzlich eine Oberfläche des Jochrückens 49, d. h. der Fläche, die von einem Zahn 52 abgewandt ist, entschichtet werden.

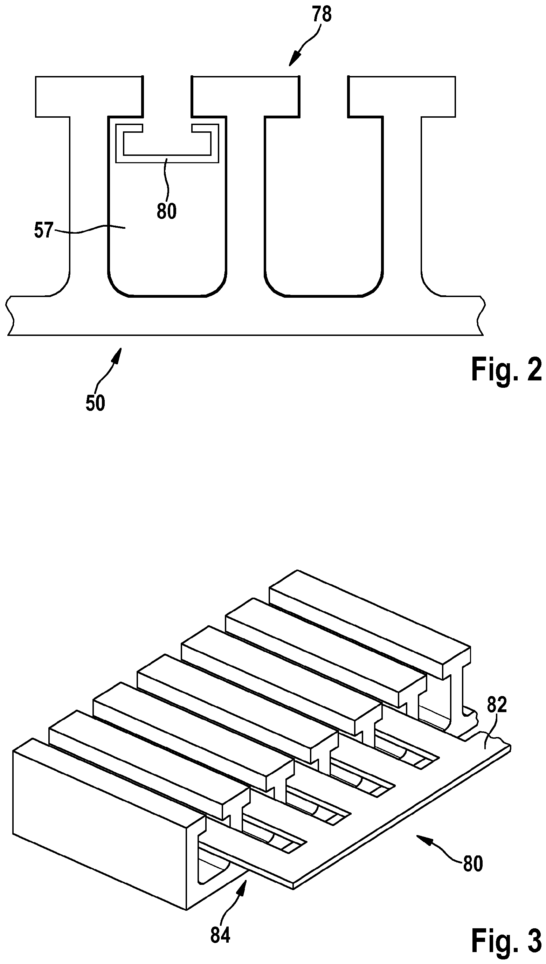

In Figur 2 ist in einer vergrößerten wahlweisen Seitenansicht eines Kerns 16 eine zusätzliche bewegliche Elektrode 80 in einer Nut 57 dargestellt. Es sei an dieser Stelle zusätzlich darauf hingewiesen, dass im Zusammenhang mit Versuchen zur Beschichtung derartiger Kerne 16 festgestellt wurde, dass im Bereich unterhalb der Zahnköpfe - d. h. der Seite bzw. Flächen, die zum Nutgrund gerichtet sind - verhältnismäßig viel Pulvermaterial 34 aufgetragen wurde. Dies ist nachteilig, da ein derartiger verdickter bzw. überproportional dicker Pulverauftrag nach dem Aushärten dazu führt, dass die Isolationsschichtdicke an dieser Stelle erstens sehr groß ist und zweitens dadurch dazu führt, dass der für die Drahtfüllung der Nut verbleibende Raum der Nut verkleinert wird. Dies führt zwar noch nicht beim Füllen der Nuten im flachen Zustand des Kerns 16 zu einem Problem. Jedoch beim Rundbiegen eines derartigen flachen Kerns 16 führt dies dazu, dass der verbleibende Raum für die Wicklung kleiner ist als konstruktiv vorgesehen. Entsprechend kann es mindestens vereinzelt zum Klemmen der Wicklung im Kern 16 kommen, wo die Schichtdicke an dieser Stelle zu groß ist.

Wie dargestellt, ist vorgesehen, dass diese bewegliche Elektrode 80 in eine Nut 57 in Nutlängsrichtung, d. h. bevorzugt parallel zum Verlauf des Profils des Nutschlitzes eingebracht wird. Es soll dann während des Aufenthalts des Kerns 16 mit der beweglichen Elektrode 80 im elektrostatischen Feld 19, die bewegliche Elektrode 80 das gleiche Potential, wie der Kern 16 haben oder ohne Potential sein. Das gleiche Potential bedeutet hier nicht zwingend, dass ein bestimmter Betrag des Potentials gleich sein muss, sondern dass die Orientierung des Potentials die gleiche ist.

In Figur 3 ist dargestellt, wie die bewegliche Elektrode 80 zum Kern 16 und dessen Nuten 57 orientiert ist. Es ist dabei erkennbar, dass die bewegliche Elektrode 80 wie ein Kamm aufgebaut ist. Hierbei gibt es eine gemeinsame Schiene 82, von der mehrere Zinken 84 ausgehen. Die Zinken 84 werden in der Station 24 während des Auftragens von Pulver 34 in die Nuten 57 eingeführt und dann durch Anpassung des Potentials der beweglichen Elektrode 80 die Schichtdicke des Pulvers 34 beeinflusst.

Im Rahmen des Verfahrens ist des Weiteren vorgesehen, dass eine Materialstärke des Pulvers 34 durch Veränderung des elektrostatischen Feldes 19 und/oder eine Veränderung einer Vorschubgeschwindigkeit durch das Feld 19 und/oder durch eine Veränderung eines Abstandes zwischen dem Kern 16 als Elektrode und der Gegenelektrode 43 verändert wird. Insbesondere ist vorgesehen, dass der Kern 16 geerdet wird.

Es ist vorzugsweise vorgesehen, dass das Pulver, vorzugsweise ein Epoxydharzgemisch, als Bestandteil 3,3 ',4,4 '- Benzophenontetracarbonsäuredianhydrid aufweist.

## Patentansprüche

1. Verfahren zum Beschichten eines elektromagnetisch erregbaren Kerns (16) durch ein elektrostatisches Feld (19), in einer Vorrichtung (10) zur Beschichtung mit einem elektrisch isolierenden Pulver (34), welches in das Feld (19) eingebracht wird,
wobei der Kern (16) als Elektrode (40) in dem Feld (19) wirkt und dadurch eine Schicht ausgebildet wird und nach dem Beschichten die Schicht durch einen Verfahrensschritt mit dem Kern (16) fest verbunden wird,
wobei der Kern (16) eine prismaartige Form aufweist und auf einer Seite Nuten (57) mit einem Nutschlitz eine Oberfläche der prismaartigen Form unterbrechen,
wobei der Kern (16) eine Polung des Feldes aufweist und
Partikel (32) des Pulvers (34) sich in einem Pulverbehälter (46) befinden, wobei der Pulverbehälter (46) eine Polung aufweist, die der Polung des Kerns (16) entgegengesetzt ist,
**dadurch gekennzeichnet, dass**
eine bewegliche Elektrode (80) verwendet wird, die in eine Nut (57) in Nutlängsrichtung eingebracht wird und während des Aufenthalts des Kerns (16) mit der beweglichen Elektrode (80) im elektrostatischen Feld (19) die bewegliche Elektrode (80) das gleiche Potential wie der Kern hat oder ohne Potential ist.

2. Verfahren nach Anspruch 1, **dadurch gekennzeichnet, dass** mehrere Kerne (16) unmittelbar aufeinanderfolgend mit dem Pulver (34) beschichtet werden.

3. Verfahren nach Anspruch 2, **dadurch gekennzeichnet, dass** die Stirnenden (72) zweier Kerne (16) beim Transport durch die Vorrichtung (10) zum Beschichten aneinanderstoßen.

4. Verfahren nach einem der vorstehenden Ansprüche, **dadurch gekennzeichnet, dass** Stirnenden (72) des Kerns (16) lamelliert ausgeführt werden.

5. Verfahren nach einem der vorstehenden Ansprüche, **dadurch gekennzeichnet, dass** die Nutschlitze zwischen einem Joch (50) des Kerns (16) und dem Pulverbehälter (46) angeordnet sind und die Nuten (57) in Richtung der Erdbeschleunigung (g) ausgerichtet sind.

6. Verfahren nach einem der vorstehenden Ansprüche, **dadurch gekennzeichnet, dass** der Kern (16) nach dem Beschichten stellenweise entschichtet wird.

7. Verfahren nach Anspruch 6, **dadurch gekennzeichnet, dass** das Entschichten an einem für eine elektromagnetische Wechselwirkung vorgesehenen Teil der Zähne oder an einer Fläche des Jochs (50), vorzugsweise an einem Jochrücken (49) oder an einer Stirnseite (51) eines Jochs (50) erfolgt.

8. Verfahren nach einem der vorstehenden Ansprüche, **dadurch gekennzeichnet, dass** eine Materialstärke des Pulvers (34) durch Veränderung des elektrostatischen Feldes (19) und /oder eine Veränderung einer Vorschubgeschwindigkeit und/oder durch eine Veränderung eines Abstandes zwischen dem Kern (16) als Elektrode und der Gegenelektrode (43) verändert wird.

## Claims

1. Method for coating an electromagnetically excitable core (16) by an electrostatic field (19) in a device (10) for coating with an electrically insulating powder (34) which is introduced into the field (19), wherein the core (16) acts as an electrode (40) in the field (19) and thereby a layer is formed and after the coating the layer is firmly connected to the core (16) by a method step,
wherein the core (16) has a prismatic shape and grooves (57) with a groove slot on one side interrupt a surface of the prismatic shape,
the core (16) having a polarity of the field and particles (32) of the powder (34) being located in a powder container (46), the powder container (46) having a polarity opposite to the polarity of the core (16),
**characterised in that**
a movable electrode (80) is used which is introduced into a groove (57) in the longitudinal direction of the groove and during the stay of the core (16) with the movable electrode (80) in the electrostatic field (19) the movable electrode (80) has the same potential as the core or is without potential.

2. A method according to claim 1, **characterized in that** a plurality of cores (16) are coated immediately successively with the powder (34).

3. A method according to claim 2, **characterized in that** the front ends (72) of two cores (16) abut against each other during transport through the device (10) for coating.

4. A method according to any one of the preceding claims, **characterized in that** front ends (72) of the core (16) are made laminated.

5. A method according to any one of the preceding claims, **characterized in that** the groove slots are arranged between a yoke (50) of the core (16) and the powder container (46) and the grooves (57) are aligned in the direction of acceleration due to gravity (g).

6. A method according to any one of the preceding claims, **characterized in that** the core (16) is decoated in places after coating.

7. A method according to claim 6, **characterized in that** the decoating takes place on a part of the teeth intended for electromagnetic interaction or on a surface of the yoke (50), preferably on a yoke back (49) or on an end face (51) of a yoke (50).

8. A method according to one of the preceding claims, **characterized in that** a material thickness of the powder (34) is changed by changing the electrostatic field (19) and/or by changing a feed rate and/or by changing a distance between the core (16) as electrode and the counter-electrode (43).

## Revendications

1. Procédé destiné à appliquer une couche sur un noyau électromagnétiquement excitable (16) par l'intermédiaire d'un champ électrostatique (19), dans un dispositif (10) d'application de couche avec une poudre électriquement isolante (34) qui est introduite dans le champ (19),
dans lequel le noyau (16) agit comme une électrode (40) dans le champ (19) et une couche est ainsi formée et après l'application d'une couche, la couche est solidement fixée au noyau (16) par une étape de procédé,
dans lequel le noyau (16) a une forme prismatique et sur un côté, des rainures (57) avec une fente de rainure interrompent une surface de la forme prismatique,
dans lequel le noyau (16) a une polarité du champ et
des particules (32) de la poudre (34) se trouvent dans un réservoir de poudre (46), le réservoir de poudre (46) ayant une polarité qui est opposée à la polarité du noyau (16), **caractérisé en ce que**
une électrode mobile (80) est utilisée, laquelle électrode mobile est introduite dans une rainure (57) dans une direction longitudinale de rainure et pendant le séjour du noyau (16) avec l'électrode mobile (80) dans le champ électrostatique (19), l'électrode mobile (80) a le même potentiel que le noyau ou n'a pas de potentiel.

2. Procédé selon la revendication 1, **caractérisé en ce que** plusieurs noyaux (16) sont revêtus de la poudre (34) directement les uns à la suite des autres.

3. Procédé selon la revendication 2, **caractérisé en ce que** les extrémités frontales (72) de deux noyaux (16) se touchent lors du transport à travers le dispositif (10) d'application de couche.

4. Procédé selon l'une des revendications précédentes, **caractérisé en ce que** des extrémités frontales (72) du noyau (16) sont réalisées de manière feuilletée.

5. Procédé selon l'une des revendications précédentes, **caractérisé en ce que** les fentes de rainures sont agencées entre une culasse (50) du noyau (16) et le réservoir de poudre (46), et les rainures (57) sont orientées dans la direction de l'accélération de la pesanteur (g).

6. Procédé selon l'une des revendications précédentes, **caractérisé en ce que**, après son application, la couche est enlevée du noyau (16) à certains endroits.

7. Procédé selon la revendication 6, **caractérisé en ce que** l'enlèvement de la couche s'effectue sur une partie des dents prévue pour une interaction électromagnétique ou sur une surface de la culasse (50), de préférence sur un dos de culasse (40) ou sur une face frontale (51) d'une culasse (50).

8. Procédé selon l'une des revendications précédentes, **caractérisé en ce qu'**une épaisseur de matière de la poudre (34) est modifiée en faisant varier le champ électrostatique (19) et/ou en faisant varier une vitesse d'avance et/ou en faisant varier une distance entre le noyau (16) faisant office d'électrode et la contre-électrode (43).
